# EUROPÄISCHE PATENTANMELDUNG

(11) **EP 2 177 770 A2**
(43) Veröffentlichungstag der Anmeldung: **21.04.2010**
(21) Anmeldenummer: 09170012.0
(22) Anmeldetag: 11.09.2009
(51) Int. Cl.: F04D 27/02

(54) **Verdichter für eine Gasturbine**

(30) Priorität: 20.10.2008 DE 102008052101
(71) Anmelder: Rolls-Royce Deutschland Ltd & Co KG, 15827 Blankenfelde-Mahlow (DE)
(72) Erfinder: Clemen, Carsten, 15749 Mittenwalde (DE); Ortmanns, Jens, 14548 Schwielowsee (DE)
(74) Vertreter: Wablat, Wolfgang

(57) **Zusammenfassung**

Die Erfindung bezieht sich auf einen Verdichter für eine Gasturbine, insbesondere eine Fluggasturbine, mit einer mit Rotorschaufeln bestückten Rotornabe, mit einem mit Statorschaufeln bestückten Stator, mit einem den Statorschaufeln zugeordneten Deckband und mit einer Einrichtung zur Abdichtung zwischen dem Deckband und der Rotornabe zur Verhinderung von Leckagen. Um eine nahezu vollständige Unterdrückung der Leckageluft und gleichzeitig eine Vereinfachung der Konstruktion und der Fertigung zu erreichen, ist die Einrichtung zur Abdichtung (20) zwischen dem Deckband (8)und der Rotornabe (3) aus einer Abführeinrichtung (23) der Leckageluft gebildet.

## Beschreibung

Die Erfindung bezieht sich auf einen Verdichter für eine Gasturbine, insbesondere eine Fluggasturbine, mit einer mit Rotorschaufeln bestückten Rotornabe, mit einem mit Statorschaufeln bestückten Stator, mit einem den Statorschaufeln zugeordneten Deckband und mit einer Einrichtung zur Abdichtung zwischen dem Deckband und der Rotornabe zur Verhinderung von Leckagen.

Der Verdichter, insbesondere Axialverdichter, umfasst eine Rotorwelle mit einer oder mehreren Verdichterstufen, die aus einem Rotor und einem Stator bestehen. Der Verdichter kann vor der ersten Stufe noch ein sogenanntes Vorleitrad aufweisen. Der mit Rotorschaufeln bestückte Rotor ist mit der Verdichter- bzw. Rotorwelle verbunden und rotiert im Gehäuse des Verdichters. Der mit Statorschaufeln bestückte Stator jeder Stufe ist nicht mit der Verdichterwelle verbunden und rotiert somit nicht. Rotierende und stehende Schaufelreihen wechseln sich in Axialrichtung der Rotorwelle in einem Verdichter ab.

Für die Statoren muss eine geeignete Befestigung erfolgen. Dazu gibt es zwei Möglichkeiten: 1.) Der Stator ist mit einem Nabenspalt versehen, bei dem die Rotorwelle unter dem Stator weiterläuft. Bei dieser Anordnung, die sich z. B. in Hochdruckverdichtern findet, ist der Stator lediglich mit dem Verdichtergehäuse verbunden. 2.) Der Stator ist auf der radial nach innen gerichteten Seite der Statorschaufeln mit einem Deckband versehen, bei dem der Stator an der Nabe mit einem Ring, dem sogenannten Deckband, verbunden ist. Diese Anordnung führt dazu, dass zwischen Rotor und Statornabe vor und hinter dem Stator ein Axialspalt entsteht, der zur Strömungsleckage führt, die durch als Einrichtung zur Abdichtung dienende Dichtungen gegenüber der Rotorwelle vermindert werden muss. Diese Konstruktion findet sich beim Dichtungssystem für eine Gasturbine nach US 6,932,349 B2. Je kleiner der Spalt zwischen Dichtung und Deckband ist, desto geringer fällt die Strömungsleckage zwischen dem vorderen und hinteren Axialspalt aus.

Die Konstruktion mit einem Nabendeckband ist mechanisch aufwändig, schwer und teuer. Die Dichtungen müssen nach Abnutzung ausgetauscht werden. Dies erfordert einen erheblichen Montage- und Kostenaufwand.

Es entsteht auf dem stehenden Nabendeckband von der Druckseite zur Saugseite des Stators eine starke Querkanalströmung, die mit der Leckageströmung durch das Deckband interagiert und gestört wird. Die Querkanalströmung tendiert dazu, auf die Schaufelsaugseite zu fließen. Das führt zur Strömungsablösung auf der Statorschaufel und damit zu großen Verlusten. Die Leckageströmung durch den Axialspalt, der sich vor und hinter dem Deckband befindet, wird durch einen großen Druckgradienten zwischen der Vorder- und Hinterkante des Stators angetrieben und kann dadurch groß werden und große Verluste erzeugen, da sie mit der Hauptströmung interagiert. Es kommt weiterhin innerhalb der Deckbandkavität zu einer Erwärmung der Strömung. Um diese negativen Strömungseffekte zu vermindern, muss die Leckage möglichst klein gehalten werden. Dies kann entweder durch eine Erhöhung der Anzahl der Dichtungen geschehen oder durch eine Verringerung des Spaltes zwischen Dichtung und Deckband. Beides macht die Geometrie komplexer in Bezug auf Konstruktion und Fertigung. Dies führt zu höheren Kosten. Da die Spalthaltung des Dichtspaltes nur schwer kontrollierbar ist, erhöht sich auch das Risiko für den Verdichterbetrieb. Insgesamt ist die Leckage negativ für den Verdichterwirkungsgrad und damit den Treibstoffverbrauch des Triebwerkes und sollte daher ganz vermieden werden.

Der Erfindung liegt die Aufgabe zugrunde, diese Nachteile des Standes der Technik zu vermeiden.

Zur Lösung dieser Aufgabe sieht die Erfindung vor, dass die Einrichtung zur Abdichtung zwischen dem Deckband und der Rotornabe aus einer Abführeinrichtung der Leckageluft gebildet ist. Damit werden eine nahezu vollständige Unterdrückung bzw. Beseitigung der Leckageluft und gleichzeitig eine Vereinfachung der Konstruktion und der Fertigung erreicht.

Es sind keine besonderen Dichtungen mehr erforderlich, wodurch auch jeglicher Montageaufwand für deren Austausch nach einer Abnutzung entfällt. Dies führt zu geringeren Kosten und Risiken und ferner zu einem verbesserten Wirkungsgrad und somit zu geringerem Treibstoffverbrauch.

Weitere vorteilhafte Ausgestaltungen der Erfindung ergeben sich aus den Unteransprüchen.

Realisiert wird die Erfindung dadurch, dass die im Stand der Technik vorhandenen Dichtungen entfernt werden und die Leckageströmung innerhalb des Deckbandes durch eine Absaugekavität innerhalb des Deckbandes und der Statorschaufel nach außen abgeführt wird.

Die Abführung erfolgt dadurch, dass die Absaugekavität mit einem niedrigeren statischen Druck beaufschlagt wird, als innerhalb der Deckbandkavität vorherrscht. Der statische Druck muss dabei um so viel geringer sein als der innerhalb der Deckbandkavität vorherrschende Druck, so dass die gewünschte Menge an reduziertem Massenstrom entnommen wird.

Das kann zum Beispiel dadurch erreicht werden, dass die Absaugekavität entweder mit einem stromauf liegenden Verdichterkanal durch geeignete Leitungen verbunden oder mit einem Sekundärluftsystem des Triebwerks verbunden wird, um z.B. als Turbinenkühlluft oder zur Bedruckung der Flugzeugkabine oder anderer Triebwerks- oder Flugzeugsysteme genutzt zu werden.

Die Menge des entnommenen absoluten Leckagemassenstroms kann dadurch kontrolliert werden, dass innerhalb der Absaugekavität oder innerhalb der Ableitung ein definierter engster Querschnitt vorgesehen wird.

Um die Leckageströmung zwischen dem hinteren und dem vorderen Axialspalt vollständig zu unterdrücken, muss die Deckbandgeometrie, konkret die durchströmte Fläche des Deckbandes, entsprechend angepasst werden. Die erforderliche Fläche kann mit den Drücken vor und hinter dem Deckband und dem Absaugmassenstrom ermittelt werden.

Im Allgemeinen beträgt der Leckagemassenstrom durch eine Deckbandkavität mit Dichtungen etwa 0.5 - 1% des Gesamtstromes. Die Absaugekavität kann also entweder so gestaltet werden, dass die Absaugemenge in der gleichen Größenordnung liegt, oder aber, wenn die Absaugung z.B. als Versorgung für die Flugzeugkabine oder die Turbinenkühlung verwendet wird, sollte diese so dimensioniert werden, dass der benötigte Massenstrom, der üblicherweise bei etwa 2-4% liegt, abgeführt wird.

Durch die Absaugekavität werden sowohl die Grenzschicht vor dem Stator als auch die Grenzschicht hinter dem Stator in die Deckbandkavität hinein gesaugt und schließlich nach außen abgeführt. Dies führt zu einer signifikanten Reduktion der Statorverluste und somit zu einer Erhöhung des Verdichterwirkungsgrades. Da zusätzlich die abgeführte Luft genutzt wird, ergibt sich daraus weiteres Potential zur Senkung des Treibstoffverbrauches.

Die Absaugekavität selbst kann eine beliebige Querschnittsform haben und z. B. als diskretes rundes, elliptisches oder mehreckiges Loch beliebiger Anzahl und Position am Deckband ausgeführt werden. Innerhalb des Deckbandes kann die Kavität entweder diskret bleiben oder sich zu einer Umfangskavität ausdehnen. Die Schaufeldurchführung kann z.B. durch ein oder mehrere Röhrchen oder durch Aushöhlen der Schaufel geschehen.

Die Konstruktion und Fertigung des erfindungsgemäßen Deckbandes ohne Dichtungen ist wesentlich einfacher als die Konstruktion mit Dichtungen. Dies erbringt eine Gewichts- und Kosteneinsparung. Desweiteren entfällt die Leckageströmung, die einerseits zu Verlusten und andererseits zu einer Erwärmung des Fluids und der Bauteile führt. Die Absaugung der Luft führt zu einer Absaugung der Grenzschicht der Verdichterseitenwand, was zu einer weiteren Verringerung der Verluste beiträgt. Die Nutzung der abgesaugten Luft für Sekundärsysteme bringt eine weitere Effizienzsteigerung. Das bedeutet einen gesteigerten Verdichterwirkungsgrad und geringeren Treibstoffverbrauch. Insgesamt lässt sich ein Anstieg des Stufenwirkungsgrades um ca. 0.2% erzielen.

Die Erfindung wird nachfolgend anhand einer Ausführungsform eines Verdichters für eine Gasturbine, hier Fluggasturbine, näher erläutert. Es zeigt:
- Fig. 1: einen prinzipiellen Längsschnitt durch einen Verdichter gemäß dem Stand der Technik,
- Fig. 2: die prinzipielle Darstellung der Strömungsphänomene bei einem Verdichter gemäß dem Stand der Technik nach Fig. 1,
- Fig. 3: einen prinzipiellen Längsschnitt durch einen Verdichter gemäß der Erfindung,
- Fig. 4: die Luftabführung bei einem erfindungsgemäßen Verdichter gemäß Fig. 3,
- Fig. 5: eine Darstellung der Luftabführung bei einem Verdichter gemäß der Erfindung,
- Fig. 6: eine Variante der Luftentnahme bei einem Verdichter gemäß der Erfindung,
- Fig. 7: eine prinzipielle Darstellung der Entnahmequerschnitte der Leckageluft am Deckband,
- Fig. 8: eine der Fig. 7 entsprechende Darstellung mit anderen Entnahmequerschnitten und
- Fig. 9: a bis c verschiedene Luftdurchführungsquerschnitte für die Leckageluft in einer Statorschaufel

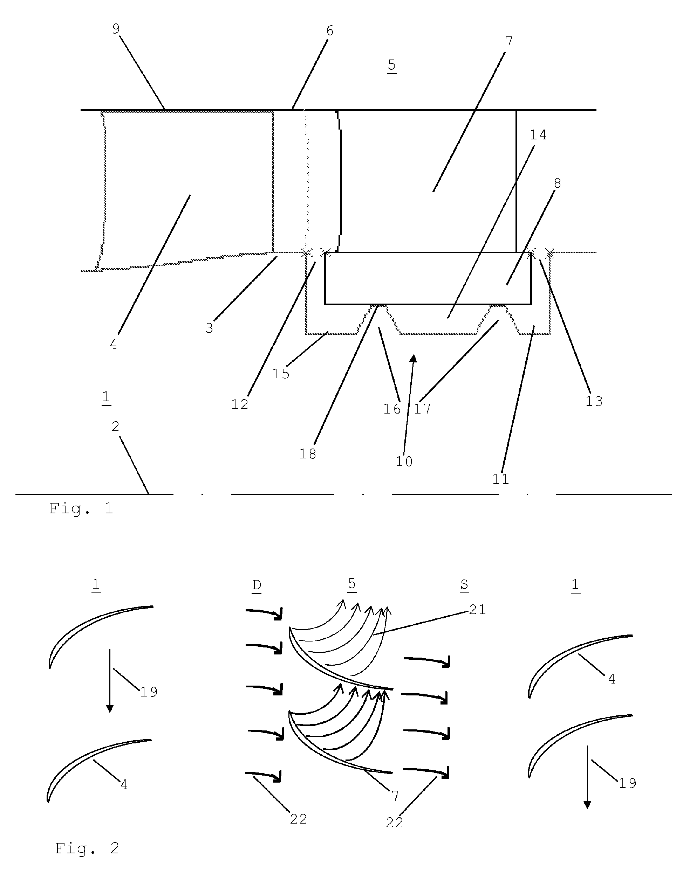

Die Fig. 1 zeigt in einem prinzipiellen Längsschnitt durch eine Stufe eines Verdichters gemäß dem Stand der Technik einen Rotor 1 mit Rotorwelle 2, Rotornabe 3 und einer Rotorschaufel 4 sowie einen Stator 5 mit Gehäuse 6 und einer Statorschaufel 7 mit einem Deckband 8, das alle Statorschaufeln 7 der Verdichterstufe auf der radial innenliegenden Seite umfasst. Zwischen der Rotorschaufel 4 und dem Stator 5 ist ein Dichtspalt 9 vorgesehen. Zur Aufnahme des Deckbandes 8 ist in der Rotornabe 3 eine radial umlaufende Deckbandkavität 11 ausgebildet, die in Axialrichtung der Rotorwelle 2 und zu deren Rotornabe 3 einen vorderen Axialspalt 12 und einen hinteren Axialspalt 13 freilässt. Im radialen Freiraum 14 zwischen der radial innenliegenden Dichtfläche 15 des Deckbandes 8 und dem nabenseitigen Boden 15 des Freiraumes 14 sind als Einrichtung zur Abdichtung 10 zwei im Querschnitt kegelstumpfförmige Dichtungen 16 und 17 ausgebildet, die jeweils einen Radialspalt 18 zur Dichtfläche 15 des Deckbandes 8 ausbilden.

Diese Ausbildung führt dazu, dass zwischen der Rotornabe 3 und dem Deckband 8 des Stators 5 in dem vorderen und dem hinteren Axialspalt 12, 13 eine Strömungsleckage entsteht, die durch die beiden Dichtungen 16, 17 gegenüber der Rotorwelle 2 vermindert werden soll. Je kleiner der Radialspalt 18 zwischen den Dichtungen 16,17 und dem Deckband 8 ist, desto geringer fällt die Strömungsleckage zwischen dem vorderen und dem hinteren Axialspalt 12, 13 aus.

Wie es in Fig. 2 dargestellt ist, entsteht bei der Drehrichtung 19 des Rotors 1 eine starke Querkanalströmung 21 auf dem stehenden Deckband 8 der Statorschaufeln 7 von der Druckseite D zur Saugseite S des Stators 5, die mit der Leckageströmung 22 durch das Deckband 8 interagiert und gestört wird. Die Querkanalströmung 21 tendiert dazu, auf die Saugseite S der Statorschaufel 7 zu fließen. Das führt zur Strömungsablösung auf der Statorschaufel 7 und damit zu großen Verlusten. Die Leckageströmung 22 durch den Axialspalt 12, 13, der sich vor und hinter dem Deckband 8 befindet, wird durch einen großen Druckgradienten zwischen der Vorder- und Hinterkante des Stators 5 angetrieben und kann dadurch groß werden und große Verluste erzeugen, da diese mit der Hauptströmung interagiert. Es kommt weiterhin innerhalb der Deckbandkavität 11 zu einer Erwärmung der Strömung. Um diese negativen Strömungseffekte zu vermindern, muss die Leckage möglichst klein gehalten werden. Dies kann entweder durch eine Erhöhung der Anzahl der Dichtungen 16, 17 geschehen oder durch eine Verringerung des Radialspaltes 18 zwischen Dichtung 16, 17 und Deckband 8. Beides macht die Geometrie komplexer in Bezug auf Konstruktion und Fertigung. Dies führt zu höheren Kosten. Da die Spalthaltung des Radialspaltes 18 nur schwer kontrollierbar ist, erhöht sich auch das Risiko für den Verdichterbetrieb. Insgesamt ist die Leckage negativ für den Verdichterwirkungsgrad und damit den Treibstoffverbrauch des Triebwerkes und sollte daher ganz vermieden werden.

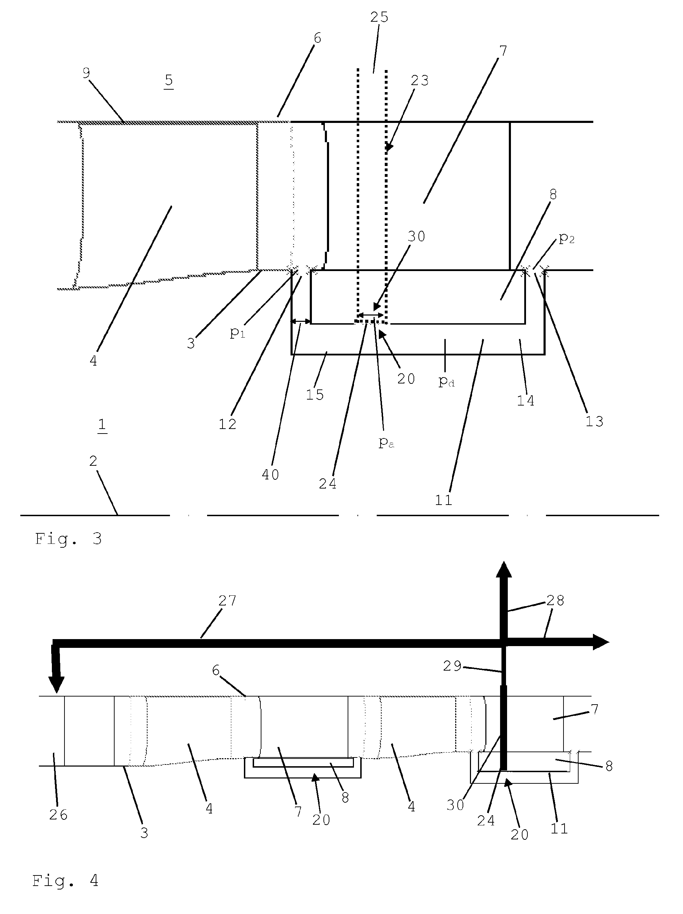

Die Fig. 3 bis 9 zeigen den erfindungsgemäßen Verdichter für eine Fluggasturbine mit Rotor 1, Rotorwelle 2, Rotornabe 3, Rotorschaufel 4, Stator 5, Gehäuse 6, Statorschaufel 7, Deckband 8, Dichtspalt 9, Deckbandkavität 11, vorderem und hinterem Axialspalt 12, 13 und Freiraum 14 mit nabenseitigem Boden 15.

Zwischen dem Deckband 8 und der Rotornabe 3 ist als Einrichtung zur Abdichtung 20 eine Abführeinrichtung 23 für Leckageluft gebildet, die von der Deckbandkavität 11 aus über eine Luftentnahmeöffnung 24 und einen Luftabführungskanal 25 durch das Deckband 8 und die Statorschaufel 7 abgeführt wird. Der Luftabführungskanal 25 bildet dabei eine Absaugekavität 30 für Leckageluft.

Damit werden eine nahezu vollständige Unterdrückung der Leckageluft und gleichzeitig eine Vereinfachung der Konstruktion und der Fertigung erreicht. Es sind keine besonderen Dichtungen 16, 17 - wie im Stand der Technik nach Fig. 1 - mehr erforderlich, wodurch auch jeglicher Montageaufwand für deren Austausch nach einer Abnutzung entfällt. Dies führt zu geringeren Kosten und Risiken und ferner zu einem verbesserten Wirkungsgrad und somit zu geringerem Treibstoffverbrauch der mit dem erfindungsgemäßen Verdichter versehenen Fluggasturbine.

Die erfindungsgemäße Ausführungsform wird dadurch geschaffen, dass die im Stand der Technik nach Fig. 1 vorhandenen Dichtungen 16, 17 entfernt werden und die Leckageströmung 22 aus der Deckbandkavität 11 unterhalb des Deckbandes 8 durch die Absaugekavität 30 der Abführeinrichtung 23 innerhalb des Deckbandes 8 und der Statorschaufel 7 nach außen abgeführt wird.

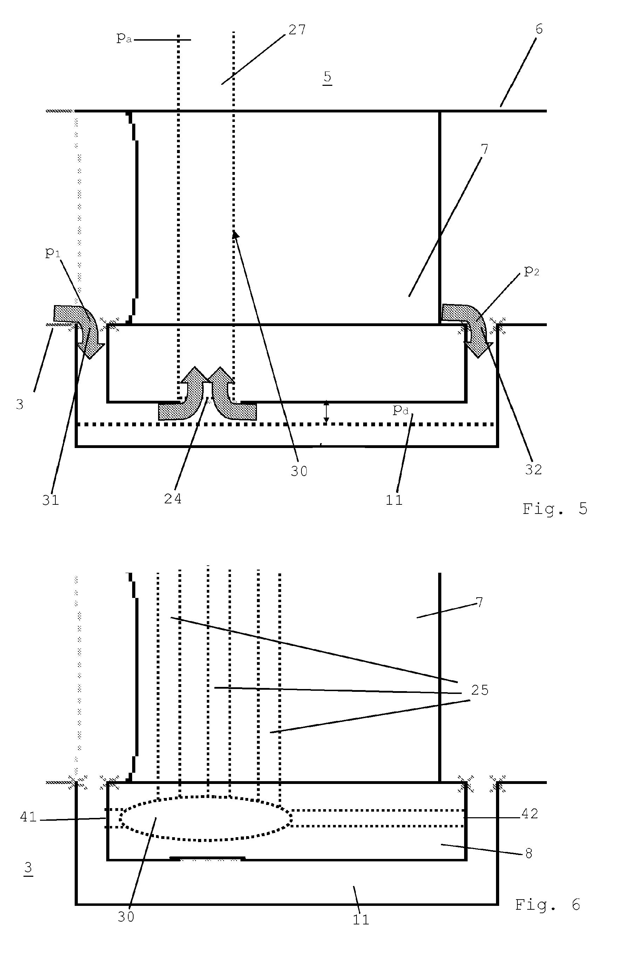

Die Abführung erfolgt gemäß Fig. 5 dadurch, dass die Absaugekavität 30 in Form des Luftabführungskanals 25 mit einem niedrigeren statischen Druck pₐ beaufschlagt wird, als dem Druck p_{d}, der innerhalb der Deckbandkavität 11 vorherrscht. Der statische Druck pₐ muss dabei um so viel geringer sein als der innerhalb der Deckbandkavität 11 vorherrschende Druck p_{d} , so dass die gewünschte Menge an reduziertem Massenstrom entnommen wird.

Das kann z. B. - wie es in Fig. 4 dargestellt ist - dadurch erreicht werden, dass die Absaugekavität 30 entweder mit einem stromauf liegenden Verdichterkanal 26 durch geeignete Rückführungsleitungen 27 oder mit einem Sekundärluftsystem 28 des Triebwerks verbunden wird, um z.B. als Turbinenkühlluft oder zur Bedruckung der Flugzeugkabine oder anderer Triebwerks- oder Flugzeugsysteme genutzt zu werden.

Die Menge des entnommenen absoluten Leckagemassenstroms kann dadurch kontrolliert werden, dass innerhalb der Absaugekavität 30 bzw. innerhalb der Abführungseinrichtung 23 ein definierter engster Querschnitt 29 (Fig. 4) vorgesehen wird.

Um die Leckageströmung 22 zwischen dem hinteren und dem vorderen Axialspalt 13, 12 vollständig zu unterdrücken, muss die Deckbandgeometrie, konkret die durchströmte Fläche 40 des Deckbandes 8, entsprechend angepasst werden. Die erforderliche Fläche 40 kann mit den Drücken p₁ und p₂ der eingesaugten Grenzschichten 31 bzw. 32 vor bzw. hinter dem Deckband 8 und dem Absaugmassenstrom ermittelt werden (Fig. 5).

Im Allgemeinen beträgt der Leckagemassenstrom durch die Deckbandkavität 11 mit Dichtungen 16, 17 gemäß dem Stand der Technik etwa 0.5 - 1% des Gesamtstromes. Die Absaugekavität 30 kann also entweder so gestaltet werden, dass die Absaugemenge in der gleichen Größenordnung liegt, oder aber, wenn die Absaugung z.B. als Versorgung für die Flugzeugkabine oder die Turbinenkühlung verwendet wird, sollte diese so dimensioniert werden, dass der benötigte Massenstrom, der üblicherweise bei etwa 2-4% liegt, abgeführt wird.

Durch die Absaugekavität 30 werden sowohl die Grenzschicht 31 vor dem Stator 7 als auch die Grenzschicht 32 hinter dem Stator 7 in die Deckbandkavität 30 hineingesaugt und schließlich nach außen abgeführt (Fig. 5). Dies führt zu einer erheblichen Verminderung der Statorverluste und somit zu einer Erhöhung des Verdichterwirkungsgrades. Da zusätzlich die abgeführte Luft genutzt wird, ergibt sich daraus weiteres Potential zur Senkung des Treibstoffverbrauches des Triebwerkes.

Eine Variante der Luftentnahme ist in Fig. 6 dargestellt. Während gemäß der Ausführungsform nach den Fig. 3 bis 5 die Luftentnahmeöffnung 24 in der radialen Stirnfläche des Bandes 8 angeordnet ist, sind gemäß Fig. 6 in den axialen Stirnseiten des Deckbandes 8 zwei Luftentnahmeöffnungen 41, 42 angeordnet, welche die Absaugekavität 30 bilden, die mit den Luftabführungskanälen 25 im Deckband 8 verbunden ist.

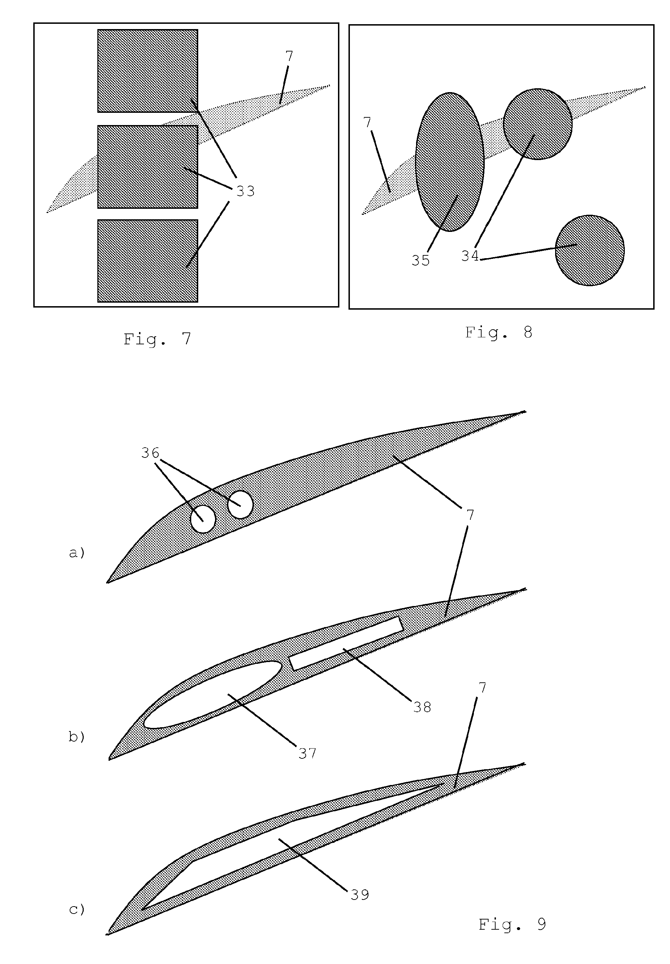

Die Absaugekavität 30 selbst kann gemäß den Fig. 7 und 8 eine beliebige Querschnittsform haben und z. B. als mehreckiges, diskretes rundes oder elliptisches Loch 33, 34 bzw. 35 beliebiger Anzahl und Position im Deckband 8 ausgeführt werden. Innerhalb des Deckbandes 8 kann die Absaugekavität 30 entweder diskret bleiben oder sich zu einer Umfangskavität ausdehnen. Die Durchführung durch die Statorschaufel 7 kann z.B. durch ein oder mehrere Röhrchen als Rundloch 36, Langloch 37 oder Schlitz 38 oder durch Aushöhlen der Statorschaufel 7 in Form einer Hohlkammer 39 (Fig. 9 a bis c) erfolgen.

Die Konstruktion und Fertigung des erfindungsgemäßen dichtungslosen Deckbandes 8 ist wesentlich einfacher als die Konstruktion mit Dichtungen 16, 17 gemäß dem Stand der Technik nach den Fig. 1 und 2. Dies erbringt eine Gewichts- und Kosteneinsparung. Desweiteren entfällt die Leckageströmung, die einerseits zu Verlusten und andererseits zu einer Erwärmung des Fluids und der Bauteile führt. Die Absaugung der Luft führt zu einer Absaugung der Grenzschicht der Verdichterseitenwand, was zu einer weiteren Verringerung der Verluste beiträgt. Die Nutzung der abgesaugten Luft für Sekundärsysteme bringt eine weitere Effizienzsteigerung. Das bedeutet einen gesteigerten Verdichterwirkungsgrad und geringeren Treibstoffverbrauch des Triebwerkes. Insgesamt lässt sich ein Anstieg des Stufenwirkungsgrades um ca. 0.2% erzielen.

### Bezugszeichenliste

- 1: Rotor
- 2: Rotorwelle
- 3: Rotornabe
- 4: Rotorschaufel
- 5: Stator
- 6: Gehäuse
- 7: Statorschaufel
- 8: Deckband
- 9: Dichtspalt
- 10: Einrichtung zur Abdichtung
- 11: Deckbandkavität
- 12: Axialspalt
- 13: Axialspalt
- 14: Freiraum
- 15: Boden
- 16: Dichtung
- 17: Dichtung
- 18: Radialspalt
- 19: Drehrichtung
- 20: Einrichtung zur Abdichtung
- 21: Querkanalströmung
- 22: Leckageströmung
- 23: Abführeinrichtung
- 24: Luftentnahmeöffnung
- 25: Luftabführungskanal
- 26: Verdichterkanal
- 27: Rückführleitung
- 28: Sekundärluftstrom
- 29: engster Querschnitt
- 30: Absaugekavität
- 31: Grenzschicht
- 32: Grenzschicht
- 33: mehreckiges Loch
- 34: rundes Loch
- 35: elliptisches Loch
- 36: Rundloch
- 37: Langloch
- 38: Schlitz
- 39: Hohlkammer
- 40: durchströmte Fläche
- 41: Luftentnahmeöffnung
- 42: Luftentnahmeöffnung
- D: Druckseite
- S: Saugseite

## Patentansprüche

1. Verdichter für eine Gasturbine, insbesondere eine Fluggasturbine, mit einer mit Rotorschaufeln bestückten Rotornabe, mit einem mit Statorschaufeln bestückten Stator, mit einem den Statorschaufeln zugeordneten Deckband und mit einer Einrichtung zur Abdichtung zwischen dem Deckband und der Rotornabe zur Verhinderung von Leckagen,
**dadurch gekennzeichnet,**
**dass** die Einrichtung zur Abdichtung (20) zwischen dem Deckband (8) und der Rotornabe (3) aus einer Abführeinrichtung (23) der Leckageluft gebildet ist.

2. Verdichter nach Anspruch 1, **dadurch gekennzeichnet**, die Abführeinrichtung (23) als Absaugekavität (30) innerhalb des Deckbandes (8) und der Statorschaufel (7) ausgebildet ist, um die Leckageluft nach außen abzuführen.

3. Verdichter nach Anspruch 1 oder 2, **dadurch gekennzeichnet, dass** die Absaugekavität (30) mit einem niederen statischen Druck beaufschlagt ist, als der innerhalb der Deckbandkavität (11) vorherrschende Druck.

4. Verdichter nach einem der Ansprüche 1 bis 3, **dadurch gekennzeichnet, dass** die Absaugekavität (30) mit einem stromauf liegenden Verdichter (27) über eine Rückführleitung (27) verbunden ist.

5. Verdichter nach einem der Ansprüche 1 bis 3, **dadurch gekennzeichnet, dass** die Absaugekavität (30) mit einem Sekundärluftsystem (28) des Triebwerkes verbunden ist.

6. Verdichter nach einem der Ansprüche 4 oder 5, **dadurch gekennzeichnet, dass** innerhalb der Absaugekavität (30) bzw. innerhalb der Luftabführungskanals (25) der Abführungseinrichtung (23) ein definierter engster Querschnitt (29)vorgesehen ist.

7. Verdichter nach einem der Ansprüche 1 bis 6, **dadurch gekennzeichnet, dass** die durchströmte Fläche der Luftentnahmeöffnung (24) des Deckbandes (8) aus den Drücken der eingesaugten Grenzschichten (31, 32) vor bzw. hinter dem Deckband (8) bzw. in der Deckbandkavität (11) ermittelt wird.

8. Verdichter nach einem der Ansprüche 1 bis 7, **dadurch gekennzeichnet, dass** die Absaugekavität (30) bzw. der Querschnitt der Luftentnahmeöffnung (24) im Deckband (8) als mehreckiges, diskretes rundes oder elliptisches Loch (33, 34, 35) ausgebildet ist.

9. Verdichter nach einem der Ansprüche 1 bis 7, **dadurch gekennzeichnet, dass** die Absaugekavität (30) in der Statorschaufel (7) als Rundloch (36), Langloch (37), Schlitz (38) oder Hohlkammer (39) ausgebildet ist.
